# EUROPÄISCHE PATENTSCHRIFT

(11) **EP 2 064 103 B1**
(45) Veröffentlichungstag und Bekanntmachung des Hinweises auf die Patenterteilung: **28.11.2012**
(21) Anmeldenummer: 07818160.9
(22) Anmeldetag: 14.09.2007
(51) Int. Cl.: B61D 17/04, B61D 17/12, B62D 31/02

(54) **SCHIENENFAHRZEUGDACH**
RAIL VEHICLE ROOF
TOIT DE VÉHICULE FERROVIAIRE

(30) Priorität: 15.09.2006 DE 102006044220
(43) Veröffentlichungstag der Anmeldung: 03.06.2009
(73) Patentinhaber: Bombardier Transportation GmbH, 10785 Berlin (DE)
(72) Erfinder: LÖBER, Mirko, 34246 Vellmar (DE); SIFRI, Nino, 34323 Maisfeld (DE)
(74) Vertreter: Patentanwälte Bressel und Partner
(86) Internationale Anmeldenummer: PCT/EP2007/008015
(87) Internationale Veröffentlichungsnummer: WO 2008/031607

(56) Entgegenhaltungen:
- EP-A- 0 369 134
- DE-A1- 19 757 203
- US-A- 5 749 302

## Beschreibung

Die Erfindung betrifft ein Schienenfahrzeugdach oder -dachsegment, das insbesondere zum Abdecken einer Lokomotive ausgestaltet ist. Die Erfindung betrifft ferner ein Herstellungsverfahren zum Herstellen eines solchen Schienenfahrzeugdachs oder -dachsegments.

Unter einer Lokomotive wird auch ein Triebkopf für einen Schienenfahrzeug-Zugverband verstanden. "Lokomotive" im Sinne der hier vorliegenden Anmeldung kann insbesondere auf ein Triebfahrzeug oder einen Triebkopf für schwere Schienenfahrzeuge und Zugverbände beschränkt sein, nämlich insbesondere auf Fern-, Güter und Regionalzüge, und schließt in diesem Fall daher leichte Schienenfahrzeuge wie Straßenbahnen und Untergrundbahnen des Nahverkehrs aus. Dächer für Lokomotiven müssen schnell demontiert werden können, um einen Austausch von Gerüsten und Aggregaten im Maschinenraum zu ermöglichen.

Bei Lokomotiven und Triebköpfen werden Dachsegmente, aus denen das Dach aufgebaut wird, üblicherweise durch Verschweißen von Aluminium oder Stahlprofilen und Blechen gefertigt. Das Schweißen hat den Nachteil, dass in erheblichem Maße Wärme in die Teile eingeleitet wird. Dadurch entstehen bleibende mechanische Spannungen. Auch können sich die Teile verziehen (verformen), so dass zusätzlicher Aufwand für eine Korrektur der Verformung entsteht. Außerdem ist die dynamische Festigkeit der Dachkonstruktion im Fall von Aluminiumteilen im Bereich der Schweißnaht verringert. Aber auch abgesehen von der Verformung erfordert eine Schweißnaht eine Vor- und Nachbearbeitung. Die Verwendung von beschichteten Werkstücken, insbesondere von kunststoffbeschichteten Werkstücken ist aufgrund des hohen Wärmeeintrags nicht möglich. Aber auch bei grundsätzlich für ein Verschweißen geeigneten Werkstoffen tritt im Bereich der Schweißnaht eine erhebliche thermische Belastung der Materialien auf. Außer der bereits erwähnten Möglichkeit, dass sich die Festigkeit verringert, können durch die thermische Belastung Materialstrukturen verändert, beschädigt und/oder in ihrem Aussehen verändert werden. Ein weiterer Nachteil des Verschweißens besteht darin, dass der Aufwand für Schweißgeräte und Räume, in denen geschweißt werden darf, hoch ist.

Außerdem können Schweißverbindungen nur verhältnismäßig ungenau reproduziert werden, d. h. der Wärmeeintrag, die erzielte Festigkeit und der Verzug sind verschieden. Weiterhin ist es nicht, oder nur sehr eingeschränkt möglich, verschiedene Materialien miteinander zu verschweißen. Die Umweltverträglichkeit des Schweißverfahrens ist als gering einzustufen.

EP 0369 134 A1 beschreibt eine Schienenfahrzeugzelle, die aus einem Traggerüst und an diesem befestigten Sandwichteilen mit einer äußeren und einer inneren Deckschicht und einer zwischen dieser eingeklebten Stützschicht besteht. Die Traggerüstteile sind innerhalb der einzelnen Zellmodule vorzugsweise gitterartig miteinander verbunden und weisen Spreizdübel-Verschraubungen auf. Die Deckschichten können aus Faserverbundschichten, die mit den Traggerüstteilen flächig verklebt und, falls die Klebeverbindung örtlich noch verstärkt werden soll, zusätzlich auch noch stellenweise vernietet sind, bestehen. Gemäß einem in der Druckschrift beschriebenen Ausführungsbeispiel wird die äußere Deckschicht auf eine Formschale aufgelegt und mit einer Klebeschicht belegt, woraufhin Tragprofilteile des Traggerüstes aufgelegt werden. Verbleibende Flächenbereiche werden nunmehr mit einem Wabenkernmaterial belegt. Die Tragprofilteile sind gitterartig derart angeordnet, dass äußere Quer- und Längsprofile eine in Umfangsrichtung geschlossene Randeinfassung für die Sandwichstruktur mit inneren und äußeren Deckschichten aus Faserverbundwerkstoff und einer zwischenliegenden Wabenkern-Stützschicht bilden.

DE 197 57 203 A1 beschreibt ein Wandelement mit einem zwischen zwei Decklagen festgelegten Gittergerüst aus winklig zueinander stehenden oder sich kreuzenden Gerüststreben, die mit Knotenverbindern miteinander verbunden sind. Um Wandsegmente herstellen zu können, sind die einzelnen Gerüststäbe an ihren Verbindungsstellen jeweils über Knotenverbinder miteinander durch Stecken und gegebenenfalls durch zusätzliches Verkleben oder Vernieten verbunden.

US 5,749,302 beschreibt, dass ein Dachelement ähnlich wie die Wandpaneele als Sandwichpaneel ausgestaltet sein kann. Ein seitliches Paneel, das an der Seitenwand-Stütze aufgeklebt ist, kann außenseitig von Seitenwand-Stütze montiert sein.

Aufgabe der vorliegenden Erfindung ist es, ein Schienenfahrzeugdach oder -dachsegment anzugeben, das ohne die genannten Nachteile hergestellt werden kann bzw. hergestellt wird. Insbesondere soll es außerdem möglich sein, Teile aus verschiedenen Werkstoffen zu verwenden und Dächer mit geringem Gewicht herzustellen, die jedoch hohen Anforderungen an die dynamische Festigkeit und Tragfähigkeit genügen.

Es wird vorgeschlagen, eine Unterkonstruktion aus einer Mehrzahl von profilierten, blechförmigen Elementen und optional aus weiteren Elementen herzustellen sowie eine Außenabdeckung mit der Unterkonstruktion zu verkleben.

Die Unterkonstruktion befindet sich im Wesentlichen unterhalb der Außenabdeckung. Dies schließt jedoch nicht aus, dass sich die Außenabdeckung stellenweise in Bereiche erstreckt, die unterhalb eines Teils der Unterkonstruktion liegen, zum Beispiel an Aussparungen oder Einbuchtungen des Dachs.

Die Unterkonstruktion weist, wie erwähnt, eine Mehrzahl von profilierten blechförmigen Elementen auf. Diese Elemente können bei einer bevorzugten Ausführungsform aus Metallblech bestehen und zum Beispiel durch bekannte Biegeverfahren ihre profilierte Form erhalten haben. Zumindest ein Teil der blechförmigen Elemente hat ein Hut-Profil, und beispielsweise kann ein Teil der blechförmigen Elemente ein einfaches Winkelprofil und/oder ein Z-Profil aufweisen.

Bevorzugt wird, dass zumindest ein Teil der profilierten blechförmigen Elemente (im Gegensatz zu plattenförmigen, breiten Elementen) langgestreckte, strebenartige Elemente sind. Es ist daher möglich, die blechförmigen Elemente zu einer gerippeartigen Unterkonstruktion zu verbinden, die für sich genommen noch keine Dachabdeckung bildet. In diesem Fall entsteht eine besonders leichte Konstruktion, die außerdem mit geringen Mengen an Material auskommt. Gleichzeitig kann eine gerippeartige Unterkonstruktion sehr stabil sein oder zumindest in Kombination mit der Außenabdeckung sehr stabil sein. Die blechförmigen Elemente der Unterkonstruktion können die tragende Konstruktion des Dachs oder -segments bilden. In diesem Fall ist daher keine weitere tragende Konstruktion im Dach erforderlich.

Zumindest ein Teil (vorzugsweise alle) zwischen den profilierten blechförmigen Elementen hergestellten oder herzustellenden Verbindungen wird bzw. ist durch Nietverbindungen hergestellt. Nieten ist eine kostengünstige Kaltfügetechnik. Vorzugsweise handelt es sich bei den Nietverbindungen um solche ohne Durchgangsöffnung, zum Beispiel um Stanznietverbindungen. Die Nietverbindungstechnik ist aus dem Bau von Straßenkraftfahrzeugen bekannt. Vorzugsweise wird jede Verbindung der profilierten blechförmigen Elemente untereinander durch Nietverbindungen hergestellt und/oder zumindest auf ein Verschweißen der blechförmigen Elemente vollständig verzichtet.

Eine erhebliche Gewichtszunahme durch die Stanznieten findet nicht statt. Im Gegenteil dazu kann durch Wahl von blechförmigen Materialien mit geringerem Gewicht als für ein Verschweißen erforderlich Gewicht eingespart werden. Hinzu kommt, dass bei der bevorzugten Ausgestaltung die Außenabdeckung derart mit der Unterkonstruktion verklebt wird, dass die Außenabdeckung die Unterkonstruktion zusätzlich gegen Formveränderungen stabilisiert. Besonders bevorzugt wird, dass die Außenabdeckung eine Mehrzahl von blechförmigen Platten aufweist, von denen zumindest eine in einem Randbereich der Platte umlaufend mit der Unterkonstruktion verklebt ist. Anders ausgedrückt weist die Platte zum Beispiel an ihrer Unterseite einen Randbereich auf, der umlaufend über eine Klebstoffzone mit der Unterkonstruktion verklebt ist. Bei einer Platte mit rechteckförmiger Unterseite zum Beispiel weist der Randbereich etwa die Form eines rechteckigen Bilderrahmens auf und ist der Randbereich aufgrund der Klebstoffschicht, die geschlossen umläuft, dicht (insbesondere luftdicht und/oder wasserdicht) mit der Unterkonstruktion verbunden. Größere Dachflächen werden beispielsweise auf diese Art durch mehrere blechförmige Platten abgedeckt, die in der Art von Fliesen nebeneinander angeordnet und mit der Unterkonstruktion verklebt werden, wobei jedoch keine vollflächige Verklebung, wie meist bei Fliesen, stattfindet. Fugen zwischen den Platten können zusätzlich geschlossen bzw. abgedichtet werden. Hierfür kann beispielsweise 1-Komponenten-Polyurethan-Hybrid-Abdichtmasse (z. B. von Sika Schweiz AG Industry, Tüffenwies 16, CH-8048 Zürich, Schweiz) verwendet werden, die unter Einwirkung der Luftfeuchtigkeit zu einem Elastomer vernetzt.

Bei einer besonders bevorzugten Ausgestaltung der Erfindung wird eloxiertes Aluminiumblech für die blechförmigen Elemente der Unterkonstruktion verwendet. Dies hat den Vorteil, dass die Außenabdeckung ohne arbeitsaufwändige Vorbehandlung der Unterkonstruktion aufgeklebt werden kann.

Als Klebstoff eignet sich zum Aufkleben auf eloxiertem Aluminium zum Beispiel 1-Komponenten-Polyurethan-Hybrid-Klebstoff (z. B. von Sika Schweiz AG Industry), der unter Einwirkung der Luftfeuchtigkeit zu einem Elastomer veretzt.

Die Erfindung ist jedoch nicht auf die Verwendung von Aluminiumblech für die Unterkonstruktion beschränkt. Vielmehr können zum Beispiel auch andere Metallbleche verwendet werden. Ferner ist es möglich, zwar blechförmige, jedoch nicht aus Metall bestehende Materialien einzusetzen. Es kann zum Beispiel ein Profil aus Polypropylen für die Unterkonstruktion verwendet werden. Auch faserverstärkte Kunststoffe sind geeignet.

Bei dem besonders bevorzugten Ausführungsbeispiel mit eloxiertem Aluminiumblech für die Unterkonstruktion wird für die Außenabdeckung vorzugsweise auch Aluminiumblech verwendet, aber es ist auch möglich Stahlblech einzusetzen , das optional kunststoffbeschichtet oder geprimert ist. Der oben genannte Klebstoff eignet sich für eine zuverlässige Klebeverbindung.

Dieses bevorzugte Ausführungsbeispiel verdeutlicht, dass es die Erfindung ermöglicht, für die Unterkonstruktion einerseits und die Außenabdeckung andererseits verschiedene Materialien einzusetzen. Insbesondere, wenn die Außenabdeckung ausschließlich über Klebstoff mit der Unterkonstruktion verbunden wird, ist lediglich auf die Auswahl eines geeigneten Klebstoffes zu achten, der die beiden verschiedenen Materialien zuverlässig aneinander befestigt.

Um eine zuverlässige Klebstoffverbindung zu erzeugen, werden nicht nur bei dem zuvor beschriebenen Ausführungsbeispiel vorzugsweise Abstandshalter verwendet. Vorzugsweise vor dem Aufbringen des Klebstoffs wird zunächst der Abstandshalter bzw. werden die Abstandshalter auf die zu verklebende Fläche aufgebracht, wobei er oder sie lediglich einen kleinen Teil der zu verklebenden Fläche abdeckt/abdecken. Dabei ist der Abstandshalter bzw. sind die Abstandstandshalter aus im Wesentlichen formstabilem Material, das seine Dicke durch Anpressen der Außenabdeckung an die Unterkonstruktion nicht ändert. Durch das Anpressen können dann überschüssige Anteile des Klebstoffs seitlich aus der Klebefuge herausgedrückt werden und, soweit erforderlich, entfernt werden.

Durch die Unterkonstruktion und die Außenabdeckung sind Aufnahmeräume definiert, in die jeweils Dämmmaterial eingebracht ist. Bei der Herstellung wird zum Beispiel zunächst die Unterkonstruktion gefertigt, dann das Dämmmaterial eingebracht und danach die Außenabdeckung aufgeklebt. Bei dem Dämmmaterial handelt es sich zum Beispiel um formstabile Platten oder kaschierte Matten, zum Beispiel aus Mineralfasern.

Zum Beispiel werden die Aufnahmeräume von der Außenabdeckung nach außen vollständig abgedeckt. Im Fall der oben beschriebenen Ausgestaltung der Unterkonstruktion als Gerippe bildet die Unterkonstruktion nach innen dagegen keine vollständige Abdeckung des Dämmmaterials. Beispielsweise wird das Dämmmaterial jeweils in eine rahmenartige Aufnahme eingebracht, bevor die Außenabdeckung mit der Unterkonstruktion verklebt wird. Es ist jedoch gewährleistet, dass das Dämmmaterial nicht unbeabsichtigt in den Innenraum der Lokomotive oder des Schienenfahrzeuges gelangt. Hierzu weist die Unterkonstruktion beispielsweise für jeden Aufnahmeraum einen entsprechend breiten umlaufenden Rand auf, auf dem das Dämmmaterial aufgelegt ist. Optional können jedoch noch zusätzliche Befestigungsmittel eingesetzt werden.

Das Verkleben der Außenabdeckung mit der Unterkonstruktion hat den Vorteil, dass im Gegensatz zu Heißfügetechniken, aber auch im Gegensatz zu mechanischer Befestigung, zum Beispiel durch Verschrauben, kein Verzug stattfindet. Obwohl zum Beispiel dünnere Bleche als bei verschweißten Dächern für die Außenabdeckung eingesetzt werden können, werden dauerhaft ebene, von außen sichtbare Flächen erzielt.

Außer den bereits genannten Vorteilen ist noch Folgendes zu erwähnen:
Aufgrund der Erfindung können Verbindungen sowohl der Teile der Unterkonstruktion untereinander als auch mit der Außenabdeckung mit sehr geringen Fertigungstoleranzen, d. h. sehr gut reproduzierbar, hergestellt werden. Die Ausschussrate ist sehr gering. Es müsse keine besonderen Schutzmaßnahmen bei der Herstellung ergriffen werden, um Unfälle zu vermeiden. Die Herstellung ist in hohem Maße umweltfreundlich. Auch die Fertigungsgeschwindigkeit kann erhöht werden, da aufgrund der Kaltfügetechnik Wartezeiten und Nacharbeiten aufgrund thermischer Belastungen entfallen.

Ein besonders bevorzugtes Ausführungsbeispiel der Erfindung wird nun unter Bezugnahme auf die beigefügte Zeichnung beschrieben. Die einzelnen Figuren der Zeichnung zeigen:
- Fig. 1: einen vertikalen Querschnitt durch ein Dachsegment entlang von Rändern, auf die Dämmmaterial aufgelegt werden kann,
- Fig. 2: einen vertikalen Querschnitt durch das in Fig. 1 dargestellte Dachsegment, jedoch in einem mittleren Bereich von Aufnahmeräumen zum Aufnehmen des Dämmmaterials,
- Fig. 3: schematisch ein Detail des Dachsegments aus Fig. 1 und Fig. 2 zur Darstellung eines Herstellungsschritts, mit dem eine Platte einer Außenabdeckung auf die Unterkonstruktion aufgeklebt wird,
- Fig. 4: ein Detail des Dachsegments gemäß Fig. 1 und Fig. 2 in einem Bereich, in dem Teile der Unterkonstruktion über Nietverbindungen miteinander verbunden sind,
- Fig. 5: eine Draufsicht auf einen Bereich der Unterkonstruktion von außen (oben), wobei der Bereich einen Aufnahmeraum zum Aufnehmen von Dämmmaterial definiert,
- Fig. 6: einen Schnitt entlang der Linie VI - VI in Fig. 5, um einen Bereich zu veranschaulichen, in dem zwei profilierte blechförmige Elemente der Unterkonstruktion eine Ecke eines rechteckförmigen Rahmens zur Aufnahme von Dämmmaterial bilden,
- Fig. 7: eine Ansicht des Dachsegments von oben, wobei ein Teil der Außenabdeckung in der Figur weggelassen ist, um die Draufsicht auf die Unterkonstruktion zu ermöglichen, und
- Fig. 8: eine dreidimensionale Ansicht von oben auf das Dachsegment.

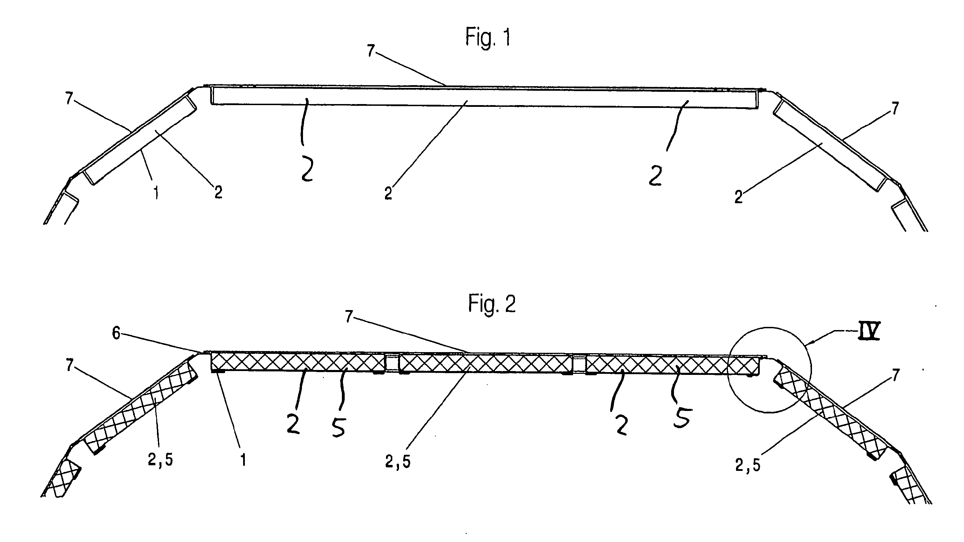

Das in Fig. 1 und Fig. 2 dargestellt Dachsegment weist eine Unterkonstruktion 1, eine Mehrzahl von Elementen 5 aus Dämmmaterial und eine Mehrzahl von Abdeckplatten 7 der Außenabdeckung auf.

Die Unterkonstruktion 1 bildet eine Mehrzahl von Aufnahmeräumen 2, in den bei der Herstellung eines der Elemente 5 eingebracht wird. Dabei sind zwei Unterteilungen des in der Mitte dargestellten Aufnahmeraumes 2 in Fig. 1 weggelassen. Aus Fig. 2 erkennt man jedoch, dass in diesen Aufnahmeraum 2 insgesamt drei Elemente 5 aus Dämmmaterial nebeneinander eingebracht wurden. Bei der Herstellung des Dachsegments wird zunächst die Unterkonstruktion 1 gefertigt, werden dann die Elemente 5 in die Aufnahmeräume 2 eingebracht und werden danach die Platten 7 als Außenabdeckung an der Unterkonstruktion 1 befestigt. Die Elemente 5 aus Dämmmaterial füllen vorzugsweise den Aufnahmeraum aus, in dem sie sich befinden.

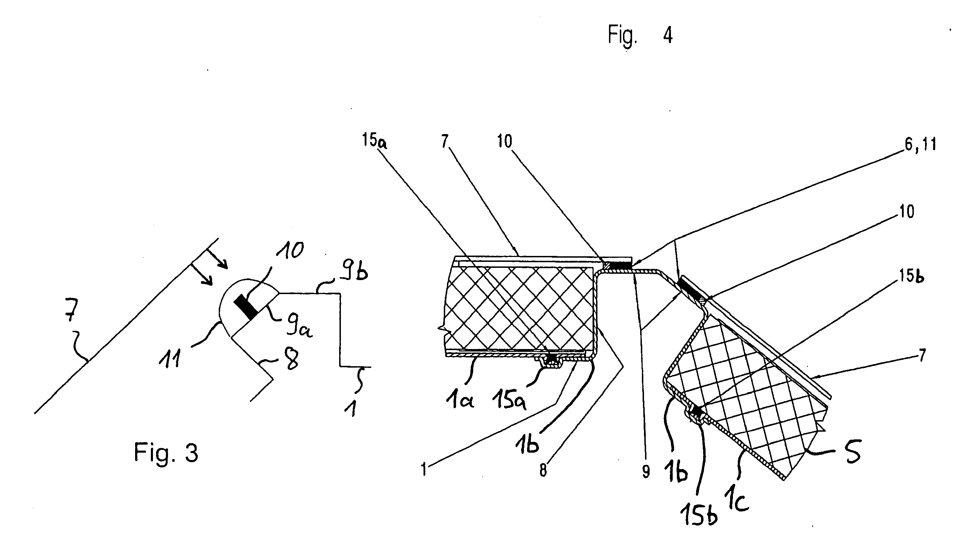

Aus Fig. 2 ist erkennbar, dass benachbarte Aufnahmeräume 2 über im Profil hutförmige (d.h. mit Krempe) Bereiche der Unterkonstruktion 1 miteinander verbunden sind. Diese Bereiche sind in Fig. 3 und Fig. 4 vergrößert dargestellt, wie durch einen Kreis mit der Bezeichnung IV in Fig. 2 angedeutet ist. Unter hutförmig wird hier nicht verstanden, dass die Krempe das Kopfteil des Huts geschlossen umläuft, da es sich um langgestreckte Elemente handelt, die lediglich im Querschnitt hutförmig sind.

In Fig. 1 ist ein in der dargestellten Zeichnungsebene durchgehender Abschnitt der Unterkonstruktion 1 dargestellt, der drei der Aufnahmeräume 2 vollständig definiert. Außerdem sind rechts und links am Rand der Figur Teile von zwei weiteren Aufnahmeräumen erkennbar. In dem Ausführungsbeispiel schließt die Unterkonstruktion 1 die Aufnahmeräume 2 aber nicht vollflächig nach unten ab. Vielmehr erstreckt sich die Unterkonstruktion 1 an der Unterseite der Aufnahmeräume 2 (wie aus Fig. 2 erkennbar ist) lediglich in einem Randbereich, d. h. die Elemente 5 sind lediglich an den Rändern der Aufnahmeräume 2 auf die Profile der Unterkonstruktion 1 aufgelegt. Im mittleren Bereich der Aufnahmeräume 2 bildet das jeweilige Element 5 die untere (innenseitige) Oberfläche der Dachkonstruktion.

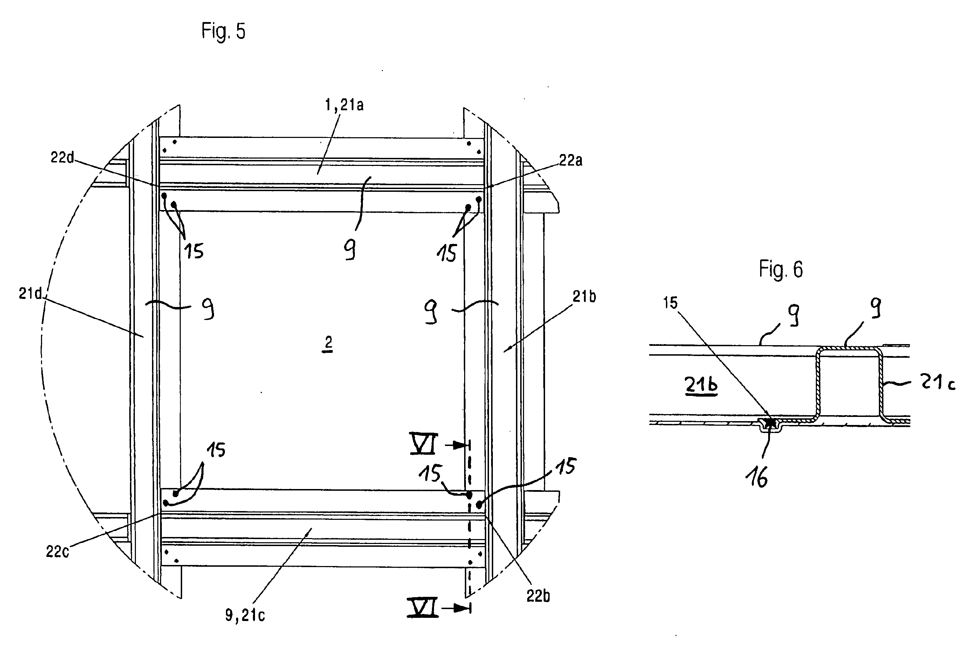

Die Zeichnungsebene von Fig. 2 ist (bezogen auf die Darstellung) in vertikaler Richtung gegenüber der Zeichnungsebene von Fig. 1 versetzt. Die Unterkonstruktion 1 ist im Bereich eines der Aufnahmeräume 2 beispielsweise so gestaltet, wie in Fig. 5 und Fig. 6 dargestellt ist.

Das in Fig. 1 und Fig. 2 dargestellte Dachsegment kann sich auch in der gewählten Schnittebene über mehr als drei Aufnahmeräume hinweg erstrecken. Beispielsweise können sich rechts und links jeweils ein weiterer Bereich anschließen (wie in den Figuren am Rand erkennbar ist), die gegenüber dem jeweiligen dargestellten Randbereich abgewinkelt verlaufen und auf diese Weise eine noch steilere Dachneigung oder gar einen vertikal verlaufenden Dachbereich bilden. Auch ist es möglich, dass das Dachsegment eine oder mehrere Durchgangsöffnungen bildet, zum Beispiel um einen Luftdurchtritt zur Be- oder Entlüftung des Maschinenraums einer Lokomotive zu ermöglichen. Solche Luftdurchtritte weisen große Öffnungsquerschnitte auf, die zum Beispiel größer sind als die Querschnitte der dargestellten Aufnahmeräume 2.

Fig. 3 zeigt eines der Bleche 7 der Außenabdeckung und einen der hutförmigen Bereiche 8 der Unterkonstruktion 1. Der hutförmige Bereich 8 bildet zwei Klebe-Oberflächen 9a, 9b, die über Klebstoff mit einem der Bleche 7 verbunden werden sollen. Die beiden Oberflächen 9 sind gegeneinander abgewinkelt. Lediglich die linke Oberfläche 9a weist eine Klebefläche (die in der Praxis z. B. ca. 20mm breit ist) für das in Fig. 3 dargestellt Blech 7 auf. Auf die rechte Oberfläche 9b kann ein nicht in Fig. 3 dargestelltes Blech 7 aufgeklebt werden.

Bei der Herstellung der Klebeverbindung wird zunächst ein Abstandshalter 10 auf die Oberfläche 9 aufgebracht. Dann wird Klebstoff 11 beidseits oder einseitig des Abstandshalters 10 und mit einer Dicke aufgebracht, die höher ist als der Abstandshalter 10. Anschließend wird das Blech 7 an den Klebstoff 11 und den Abstandshalter 10 angedrückt und es wird abgewartet, bis der Klebstoff 11 ausgehärtet ist. Durch den Abstandshalter 10 wird eine definierte Dicke der Klebstofffuge erzielt.

Fig. 4 zeigt einen vergrößerten Querschnitt durch den in Fig. 2 mit IV bezeichneten Bereich. Wie erkennbar ist, weist die Unterkonstruktion 1 in diesem Bereich drei Teile 1a, 1b, 1c auf, die jeweils paarweise über eine Nietverbindung 15a, 15b miteinander verbunden sind. Das mittlere Teil 1 b ist das Teil mit dem Hutprofil, welches die Klebeflächen 9 für die Bleche 7 definiert. Da der Hut an seiner höchsten Stelle abgewinkelt verläuft, sind auch die über das Hutprofil verbundenen Bereiche der Dachkonstruktion gegeneinander abgewinkelt (im dargestellten Fall um etwa 30 Grad).

Anders als in Fig. 3, ist der Klebstoff 11 lediglich auf der von dem Element 5 abgewandten Seite des Abstandshalters 10 angeordnet, sodass eine lediglich einseitige Klebstofffuge 6 gebildet ist.

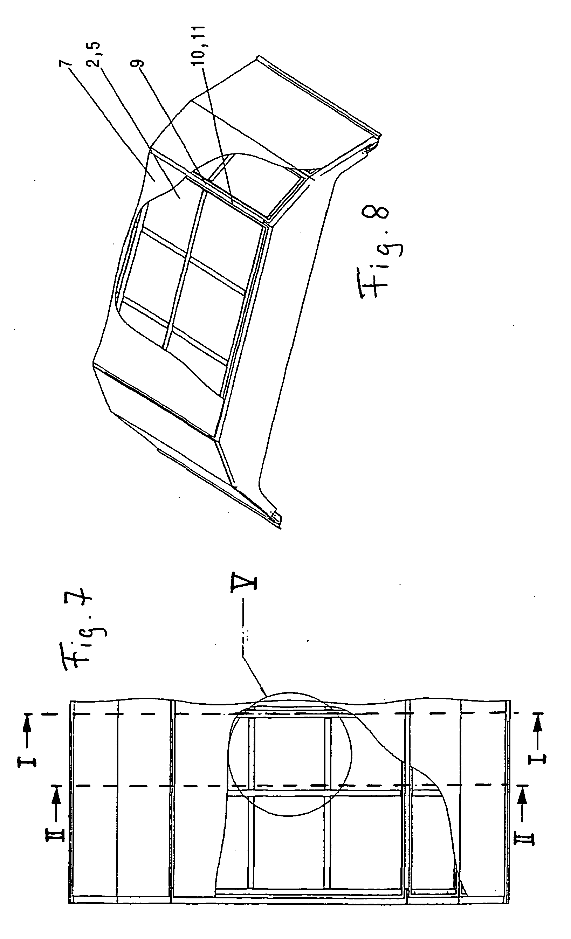

Fig. 5 zeigt einen vergrößerten Bereich der Unterkonstruktion 1, der in Fig. 7 mit dem Bezugszeichen V bezeichnet ist. In dem Bereich definieren vier Elemente der Unterkonstruktion 1, die mit den Bezugszeichen 21a - 21d bezeichnet sind, einen Aufnahmeraum 2. Die vier Elemente 21 weisen jeweils ein langgestrecktes, im Querschnitt hutförmiges Profil auf und es sind an den vier Ecken 22a - 22d eines von ihnen gebildeten rechteckigen Rahmens jeweils über zwei Stanznietverbindungen (in der "Krempe" des Huts) in der Art von Fig. 6 paarweise miteinander verbunden. Wie im Bereich der Ecken 22 erkennbar ist, erstrecken sich die Elemente 21 b, 21 d in ihrer Längsrichtung über den Rahmen hinaus und bilden ebenfalls benachbarter Rahmen mit Aufnahmeraum für Dämmmaterial. Auf diese Weise ist es möglich, lediglich aus langgestreckten Profilen rahmenförmige (oder auch anders verstrebte) Bereiche der Unterkonstruktion 1 zu bilden.

Wenn eines der Elemente 21 im Bereich des Hut-Daches abgewinkelt ist, entsteht ein Hutprofil wie in Fig. 3 und Fig. 4 dargestellt. Die außenseitigen Oberflächen 9 der Hutdächer der Elemente 21 definieren Klebeflächen zum Aufkleben der Platten 7. Im Fall von Fig. 5 kann sich eine Platte 7 über mehr als einen der Rahmen bzw. Aufnahmeräume 2 hinweg erstrecken.

Das Hutprofil wird auch aus Fig. 6 ersichtlich, die einen Schnitt durch den Eckbereich 22b darstellt. Man erkennt im Querschnitt das Element 21 c und blickt auf eine Seitenfläche des sich quer dazu erstreckenden Elements 21 b. Das Element 21 c endet an dieser Seitenfläche.

Fig. 6 zeigt auch eine Stanznietverbindung 15 zwischen den Elementen 21 c, 21 b. Beim Stanznieten mit Halbhohlniet werden die Fügeteile (hier: die Profile 21 c, 21 b) durch das Setzen eines plastisch verformbaren Hilfs-Fügeteils, dem Stanzniet 16, miteinander verbunden. Dabei wird vor dem Setzen des Stanzniets 16 kein Loch in den Fügeteilen erzeugt. Es handelt sich um eine konstruktiv nicht lösbare Verbindung. Dem eigentlichen Nietvorgang geht die Fixierung der Bauteile durch einen Niederhalter voraus. Danach durchschneidet der Halbhohl-Stanzniet 16 das stempelseitige (z. B. oben) liegende Fügeteil und fügt es unter Verspreizung des Stanzniets mit dem anderen (z. B. unteren) Fügeteil zu einer formschlüssigen Verbindung. Da das vom Stempel abgewandte Fügeteil (hier: Element 21 c) nicht durchstoßen wird, entsteht keine Durchgangslochung, sondern lediglich ein Loch in dem stempelseitigen Fügeteil (hier: Element 21 b).

Die Außenansicht des Dachsegments gemäß Fig. 7 zeigt auch die Lage der Schnittebenen von Fig. 1 und Fig. 2, die in Fig. 7 mit I bzw. II bezeichnet sind.

Fig. 8 ist eine perspektivische Darstellung des Dachsegments gemäß Fig. 1 bis Fig. 7.

## Patentansprüche

1. Schienenfahrzeugdach oder -dachsegment, insbesondere Lokomotivendach oder -dachsegment, aufweisend:
- eine Unterkonstruktion (1), die eine Mehrzahl von profilierten blechförmigen Elementen (21) aufweist,
- eine Außenabdeckung, die die Unterkonstruktion (1) nach außen abdeckt,
wobei
- die Außenabdeckung mit der Unterkonstruktion (1) verklebt ist,
- zumindest ein Teil der blechförmigen Elemente (21) langgestreckt ist,
- die Außenabdeckung eine Mehrzahl von blechförmigen Platten (7) aufweist, von denen zumindest eine in einem Randbereich der Platte (7) umlaufend mit der Unterkonstruktion verklebt ist,
**dadurch gekennzeichnet, dass**
- die blechförmigen Elemente (21) durch Nietverbindungen (15) miteinander verbunden sind,
- zumindest ein Teil der blechförmigen Elemente (21) ein Hut-Profil aufweist, das im Querschnitt ein Hutdach und eine Hutkrempe definiert,
- die blechförmigen Elemente (21) eine rahmenartige Aufnahme (2) bilden, in die ein Dämmmaterial (5) eingebracht ist,
- die zumindest eine in einem Randbereich umlaufend mit der Unterkonstruktion verklebte Platte (7) auf dem Hutdach verklebt ist und die Aufnahme (2) mit dem Dämmmaterial (5) abdeckt.

2. Schienenfahrzeugdach oder -dachsegment nach dem vorhergehenden Anspruch, wobei zumindest ein Teil der Nietverbindungen (15) keine Durchgangslöcher aufweist.

3. Schienenfahrzeugdach oder -dachsegment nach dem vorhergehenden Anspruch, wobei zumindest ein Teil der Nietverbindungen (15) Stanznietverbindungen sind.

4. Schienenfahrzeugdach oder -dachsegment nach einem der vorhergehenden Ansprüche, wobei zumindest ein Teil der profilierten blechförmigen Elemente (21) langgestreckte, strebenartige Elemente sind, die durch die Nietverbindungen (15) miteinander zu einer gerippeartigen Unterkonstruktion (1) verbunden sind.

5. Schienenfahrzeugdach oder -dachsegment nach einem der vorhergehenden Ansprüche, wobei die einzige Befestigungsverbindung zwischen der Außenabdeckung und der Unterkonstruktion (1) durch Klebstoff (11) gebildet ist.

6. Verfahren zum Herstellen eines Schienenfahrzeugdachs oder -dachsegments, insbesondere eines Lokomotivendachs oder -dachsegments, mit folgenden Schritten:
- Verbinden einer Mehrzahl von profilierten blechförmigen Elementen (21) und optional weiterer Elemente zu einer Unterkonstruktion (1), wobei zumindest ein Teil der blechförmigen Elemente (21) langgestreckt ist,
- Verkleben einer Außenabdeckung mit der Unterkonstruktion (1), wobei die Außenabdeckung eine Mehrzahl von blechförmigen Platten (7) aufweist, von denen zumindest eine in einem Randbereich der Platte (7) umlaufend mit der Unterkonstruktion verklebt wird,
**gekennzeichnet durch**
- Herstellen von Verbindungen zwischen den blechförmigen Elementen zumindest teilweise **durch** Nietverbindungen (15),
- Verwenden von Hut-Profil aufweisenden blechförmigen Elementen (21) für die langgestreckten blechförmigen Elemente (21), wobei das Hut-Profil im Querschnitt ein Hutdach und eine Hutkrempe definiert, sodass die blechförmigen Elemente (21) eine rahmenartige Aufnahme (2) bilden,
- Einbringen von Dämmmaterial (5) in die Aufnahme (2),
- Verkleben der zumindest einen in einem Randbereich umlaufend mit der Unterkonstruktion verklebten Platte (7) auf dem Hutdach und Abdecken der Aufnahme (2) mit dem Dämmmaterial (5) **durch** die Platte (7).

7. Verfahren nach dem vorhergehenden Anspruch, wobei zumindest ein Teil der Verbindungen zwischen den blechförmigen Elementen durch Nietverbindungen (15) ohne Durchgangslöcher hergestellt wird.

8. Verfahren nach dem vorhergehenden Anspruch, wobei zumindest ein Teil der Verbindungen zwischen den blechförmigen Elementen (21) durch Stanznietverbindungen hergestellt wird.

9. Verfahren nach einem der vorhergehenden Ansprüche, wobei zumindest ein Teil der profilierten blechförmigen Elemente (21) langgestreckte, strebenartige Elemente sind, die durch die Nietverbindungen (15) miteinander - und optional mit weiteren Elementen - zu einer gerippeartigen Unterkonstruktion (1) verbunden werden.

10. Verfahren nach einem der vorhergehenden Ansprüche, wobei die Außenabdeckung ausschließlich durch Verkleben mit der Unterkonstruktion (1) verbunden wird.

## Claims

1. Rail vehicle roof or roof segment, in particular a locomotive roof or roof segment, having:
- a substructure (1), which has a plurality of moulded, sheet
- like elements (21)
- an outer covering layer, which covers the substructure (1) externally,
wherein
- the outer covering layer is adhered to the substructure (1),
- at least part of the sheet-like elements (21) is elongated,
- the outer covering layer has a plurality of sheet-like panels (7), of which at least one is circumferentially adhered in its boundary area to the substructure,
**characterised in that**,
- the sheet-like elements (21) are linked together by rivet connections (15),
- at least part of the sheet-like elements (21) has a top-hat section, which defines a hat roof and a hat brim if viewed in a cross section,
- the sheet-like elements (21) form a frame-like holding fixture (2), into which an insulating material (5) is inserted,
- the at least one panel (7) circumferentially adhered in its boundary area to the substructure in a frame region is adhered to the hat roof
and covers the holding fixture (2) with the insulating material (5).

2. Rail vehicle roof or roof segment according to the preceding claim, wherein at least part of the rivet connections (15) has no clearance holes.

3. Rail vehicle roof or roof segment according to the preceding claim, wherein at least part of the rivet connections (15) are punch rivet connections.

4. Rail vehicle roof or roof segment according to one of the preceding claims, wherein at least part of the moulded, sheet-like elements (21) are elongated, strut-like elements, which are linked together to a frame-like substructure (1) using the rivet connections (15).

5. Rail vehicle roof or roof segment according to one of the preceding claims, wherein the single fastening connection is formed between the outer covering layer and the substructure (1) using adhesive material (11).

6. Method for producing a rail vehicle roof or roof segment, in particular a locomotive roof or roof segment, having the following steps:
- linking a plurality of moulded, sheet-like elements (21) and, optionally, further elements to a substructure (1), wherein at least part of the sheet-like elements (21) is elongated,
- adhering an outer covering layer to the substructure (1), wherein the outer covering layer has a plurality of sheet-like panels (7), of which at least one is circumferentially adhered in its boundary area to the substructure,
**characterised by**
- producing the connections between the sheet-like elements, at least partially using rivet connections (15),
- using the sheet-like elements (21) having top-hat sections for the elongated, sheet-like elements (21), wherein the top-hat section defines a hat roof and a hat brim if viewed in a cross section, so that the sheet-like elements (21) form a frame-like holding fixture (2),
- inserting the insulating material (5) into the holding fixture (2),
- adhering the at least one panel (7) circumferentially adhered in its boundary area to the substructure onto the hat roof and covering the holding fixture (2) with the insulating material (5) using the panel (7).

7. Method according to the preceding claim, wherein at least part of the connections is produced between the sheet-like elements using rivet connections (15) without clearance holes.

8. Method according to the preceding claim, wherein at least part of the connections is produced between the sheet-like elements (21) using punch rivet connections.

9. Method according to one of the preceding claims, wherein at least part of the moulded, sheet-like elements (21) are elongated, strut-like elements, which are linked together - and optionally with further elements - to a frame-like substructure (1) using the rivet connections (15).

10. Method according to one of the preceding claims, wherein the outer covering layer is linked to the substructure (1) exclusively by adhering it.

## Revendications

1. Toit ou segment de toit de véhicule ferroviaire, en particulier toit ou segment de toit de locomotive, présentant :
- une sous-construction (1) qui présente une pluralité d'éléments (21) profilés en forme de tôle,
- un recouvrement extérieur qui recouvre la sous-construction à l'extérieur, sachant que
- le recouvrement extérieur est collé à la sous-construction (1),
- au moins une partie des éléments (21) en forme de tôle s'étend en longueur,
- le recouvrement extérieur présente une pluralité de plaques en forme de tôle (7), dont au moins une est collée dans une zone de bord de la plaque (7) sur la périphérie à la sous-construction,
**caractérisé en ce que**
- les éléments (21) en forme de tôle sont reliés entre eux par des assemblages rivés (15),
- au moins une partie des éléments en forme de tôle (21) présente un profilé de chapeau qui définit en section transversale un toit chapeau et un rebord de chapeau,
- les éléments (21) en forme de tôle forment un logement de type cadre (2), dans lequel un matériau isolant (5) est introduit,
- l'au moins une plaque (7) collée dans une zone de bord sur la périphérie à la sous-construction est collée sur le toit chapeau et recouvre le logement (2) avec le matériau isolant (5).

2. Toit ou segment de toit de véhicule ferroviaire selon la revendication précédente, sachant qu'au moins une partie des assemblages rivés (15) ne présente pas de trous débouchants.

3. Toit ou segment de toit de véhicule ferroviaire selon la revendication précédente, sachant qu'au moins une partie des assemblages rivés (15) est formée par des assemblages rivés poinçonnés.

4. Toit ou segment de toit de véhicule ferroviaire selon l'une quelconque des revendications précédentes, sachant qu'au moins une partie des éléments profilés (21) en forme de tôle est formée par des éléments s'étendant en longueur, de type entretoise qui sont reliés entre eux par les assemblages rivés (15) pour former une sous-construction de type ossature (1).

5. Toit ou segment de toit de véhicule ferroviaire selon l'une quelconque des revendications précédentes, sachant que la seule liaison de fixation entre le recouvrement extérieur et la sous-construction (1) est formée par de la colle (11).

6. Procédé de fabrication d'un toit ou segment de toit de véhicule ferroviaire, en particulier d'un toit ou segment de toit de locomotive, présentant les étapes suivantes :
- relier une pluralité d'éléments profilés en forme de tôle (21) et en option d'autres éléments pour former une sous-construction (1), sachant qu'au moins une partie des éléments (21) en forme de tôle s'étend en longueur,
- coller un recouvrement extérieur à la sous-construction (1), sachant que le recouvrement extérieur présente une pluralité de plaques en forme de tôle (7), dont au moins une est collée dans une zone de bord de la plaque (7) sur la périphérie à la sous-construction,
**caractérisé par** les étapes suivantes
- établir des liaisons entre les éléments en forme de tôle au moins partiellement par des assemblages rivés (15),
- utiliser des éléments (21) en forme de tôle présentant un profilé de chapeau pour les éléments (21) en forme de tôle s'étendant en longueur, sachant que le profilé de chapeau définit en section transversale un toit chapeau et un rebord de chapeau de sorte que les éléments en forme de tôle (21) forment un logement (2) de type cadre,
- introduire du matériau isolant (5) dans le logement (2),
- coller l'au moins une plaque (7) collée dans une zone de bord sur la périphérie à la sous-construction sur le toit chapeau et recouvrir le logement (2) avec le matériau isolant (5) par la plaque (7).

7. Procédé selon la revendication précédente, sachant que l'au moins une partie des liaisons entre les éléments en forme de tôle est établie par des assemblages rivés (15) sans trous débouchants.

8. Procédé selon la revendication précédente, sachant qu'au moins une partie des liaisons entre les éléments (21) en forme de tôle est établie par des assemblages rivés poinçonnés.

9. Procédé selon l'une quelconque des revendications précédentes, sachant qu'au moins une partie des éléments (21) profilés en forme de tôle sont des éléments s'étendant en longueur, de type entretoise qui sont reliés entre eux par les assemblages rivés (15), et en option à d'autres éléments, pour former une sous-construction (1) de type ossature.

10. Procédé selon l'une quelconque des revendications précédentes, sachant que le recouvrement extérieur est exclusivement relié par collage à la sous-construction (1).
